# EUROPEAN PATENT SPECIFICATION

(11) **EP 2 684 981 B1**
(45) Date of publication and mention of the grant of the patent: **14.09.2016**
(21) Application number: 13175996.1
(22) Date of filing: 10.07.2013
(51) Int. Cl.: C23C 26/00, C23C 26/02, B23P 6/00, F01D 5/00

(54) **A coating/repairing process using electrospark with PSP rod**
Beschichtungs-/Reparaturverfahren mit Elektrofunken mit PSP-Stange
Processus de revêtement/réparation utilisant l'électroérosion avec tige PSP

(30) Priority: 13.07.2012 US 201213548376
(43) Date of publication of application: 15.01.2014
(73) Proprietor: General Electric Company, Schenectady, NY 12345 (US)
(72) Inventor: Lin, Dechao, Greer, SC 29650 (US); Bucci, David Vincent, Simpsonville, SC 29681 (US); Kottilingam, Srikanth Chandrudu, Simpsonville, SC 29681 (US); Cui, Yan, Greer, SC 29650 (US); Tollison, Brian Lee, Honea Path, SC 29654 (US); Schick, David Edward, Greenville, SC 29607 (US)
(74) Representative: Illingworth-Law, William Illingworth

(56) References cited:
- EP-A1- 0 503 696
- EP-A1- 1 884 306
- US-A1- 2006 134 454

## Description

### BACKGROUND OF THE INVENTION

### FIELD OF THE INVENTION

The invention relates to electrospark deposition, and specifically relates to electrospark deposition using a sintered electrode containing powders of a superalloy and a braze alloy.

### DISCUSSION OF PRIOR ART

Electrospark deposition (ESD) is a technique that can be used to deposit a metal-containing alloy from an electrode onto a substrate. ESD is used in a number of operations such as repairing, coating, welding, and micro-welding metal-containing substrates. Example uses of ESD include, but are not limited to, coating or repair operations in die manufacturing and turbine component repair.

EP 1884 306 A1 discloses a method of repairing a turbine blade made of nickel-based or cobalt-based superalloys by electrospark deposition of a material similar to the blade material.

Relatively rough coating or weld materials on the surfaces of substrates can negatively affect certain desired characteristics of the substrate-containing component. In one example, rough welds in dies can create surface imperfections on die cast parts. In another example, rough coatings on turbine components can decrease the efficiency of a jet turbine. Each of these examples often requires a separate subsequent operation, or re-work, to decrease the surface roughness of the coating or weld material. Therefore, there is a need for an improved coating and/or repairing process using ESD to deposit metal-containing alloys onto a substrate.

### BRIEF DESCRIPTION OF THE INVENTION

The following summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

One aspect of the invention provides an electrospark deposition electrode including a powder of a first metal and a powder of a second metal. The second metal is a braze alloy including nickel, the second metal having a lower melting point than the first metal. The powder of the first metal and the powder of the second metal are sintered together to form the electrospark deposition electrode so that the powder of the first metal and the powder of the second metal are comingled but not combined within the electrospark deposition electrode.

Another aspect of the invention provides a method for the deposition of a coating on a substrate. The method includes providing a substrate and providing an electrospark deposition electrode. The electrospark deposition electrode includes a powder of a first metal and a powder of a second metal. The second metal is a braze alloy including nickel, the second metal having a lower melting point than the first metal. The powder of the first metal and the powder of the second metal are sintered together to form the electrospark deposition electrode so that the powder of the first metal and the powder of the second metal are comingled but not combined within the electrospark deposition electrode. The method further includes depositing a layer of the first metal onto the substrate using an electrospark deposition process.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 is a schematized representation of an electrospark deposition coating or repairing process in accordance with an aspect of the present invention;
FIG. 2 is a cross-sectional schematic view of the electrospark deposition electrode taken along lines 2-2 of FIG. 1;
FIG. 3 is an enlarged view of a portion of the turbine component and the coating of FIG. 1; and
FIG. 4 is a top level flow diagram of an example method of deposition of a coating on a substrate in accordance with an aspect of the present invention.

### DETAILED DESCRIPTION OF THE INVENTION

Example embodiments that incorporate one or more aspects of the invention are described and illustrated in the drawings. These illustrated examples are not intended to be a limitation on the invention. For example, one or more aspects of the invention can be utilized in other embodiments and even other types of devices. Moreover, certain terminology is used herein for convenience only and is not to be taken as a limitation on the invention. Still further, in the drawings, the same reference numerals are employed for designating the same elements.

Coating and repairing operations utilizing ESD can be beneficial when compared to other metal deposition processes used in die manufacturing or turbine component repair. The ESD process tends to minimize the heat affected zone (HAZ) of the substrate. The HAZ can be defined as a volume of the substrate where the microstructure and properties of the substrate have been altered by the ESD process. Minimizing the HAZ can be beneficial for turbine components in order to retain the designed performance characteristics of the turbine component. The ESD process also tends to minimize dilution in the metal deposition process. Dilution can be defined as the weight percentage of the substrate in the diffusion layer and deposited material to the total weight of material in the diffusion layer and the deposited material. For example, in a given volume of the diffusion layer and the deposited material, 30 parts of substrate material per 100 parts of ESD deposit yields 30% dilution.

Turbine components, such as those in natural gas turbines or jet turbines can be subjected to relatively high levels of fatigue from such factors as high operating temperature, thermal cycling, and cyclic mechanical loading during normal operation. Material fatigue from these factors and others can cause cracks or fissures to develop in turbine components such as bucket, nozzle, and shroud components. These cracks and/or fissures may lead to degradation of turbine performance or even part failure. Creep is another factor leading to degradation of turbine performance and can be defined as a slow plastic deformation that occurs in a component under stress at high temperature. Creep gradually exhausts the plastic deformation capability of the component, which can lead to component failure.

ESD can be used in several ways to increase the lifespan of turbine components. In one example, ESD is used to restore or at least partially restore the turbine component to its original state. In a more specific example, ESD can be used to repair cracks caused by the fatigue modes described above. In another example, material is milled from turbine components exhibiting a significant amount of creep after which ESD can be used to apply a coating on the surface of the turbine component to restore the original dimensions of the turbine component. In another example, a coating can be applied to the surface of the turbine component using an ESD process to increase resistance to the effects of high working temperatures and corrosive atmospheres.

Many turbine components such as buckets, nozzles, and shrouds are constructed of materials known as superalloys, which exhibit material properties that are often beneficial for use in turbine components. For example, superalloys can have relatively high mechanical strength and creep resistance at high temperatures, good surface stability, and corrosion and oxidation resistance. When applying coatings or conducting repairs to turbine components, it can be beneficial to include these same properties in the coating or repair material so that the coating or repair material have the same or similar properties to withstand a typical operating environment of turbine components. In one example, the ESD process can deposit an amount of a superalloy onto the surface of a turbine component constructed of the same or a different superalloy. There are a number of commercially available superalloys, one example being the metallic alloy sold under the trademark INCONEL alloy 718 (INCONEL is a registered trademark of Huntington Alloys Corporation). Table A shows a representative elemental chemical composition found in superalloy INCONEL 718.

**Table A:**

| **Element** | Weight Percent |
|---|---|
| **Nickel** | 50.0 - 55.0% |
| **Chromium** | 17.0 - 21.0% |
| **Niobium and Tantalum** | 4.75 - 5.50% |
| **Molybdenum** | 2.80 - 3.30% |
| **Aluminum** | 0.2 - 0.8% |
| **Titanium** | 0.65 -1.15% |
| **Carbon** | 0.08% maximum |
| **Silicon** | 0.350% maximum |
| **Manganese** | 0.350% maximum |
| **Sulfur** | 0.015% maximum |
| **Copper** | 0.300% maximum |
| **Phosphorus** | 0.015% maximum |
| **Cobalt** | 1.00% maximum |
| **Iron** | Balance |

Other examples of superalloys include, but are not limited to, some stainless steel-based alloys, solid solution materials using nickel as a base alloying element such as INCONEL alloy 625, the metallic alloy sold under the trademark HAYNES 230 (HAYNES and 230 are registered trademarks of Haynes International, Inc.), precipitation hardenable superalloys such as Rene 41, the metallic alloy sold under the trademark HAYNES 282 (282 is a registered trademark of Haynes International, Inc.), Waspaloy, INCONEL alloy 718, the metallic alloy sold under the trademark GTD-111 (GTD-111 is a registered trademark of General Electric Company), the metallic alloy sold under the trademark GTD-222 (GTD-222 is a registered trademark of General Electric Company), the metallic alloy sold under the trademark GTD-444 (GTD-444 is a registered trademark of General Electric Company), Rene 108, Rene N4, Rene N5, and materials using cobalt as a base alloying element such as HAYNES 25 and FSX414.

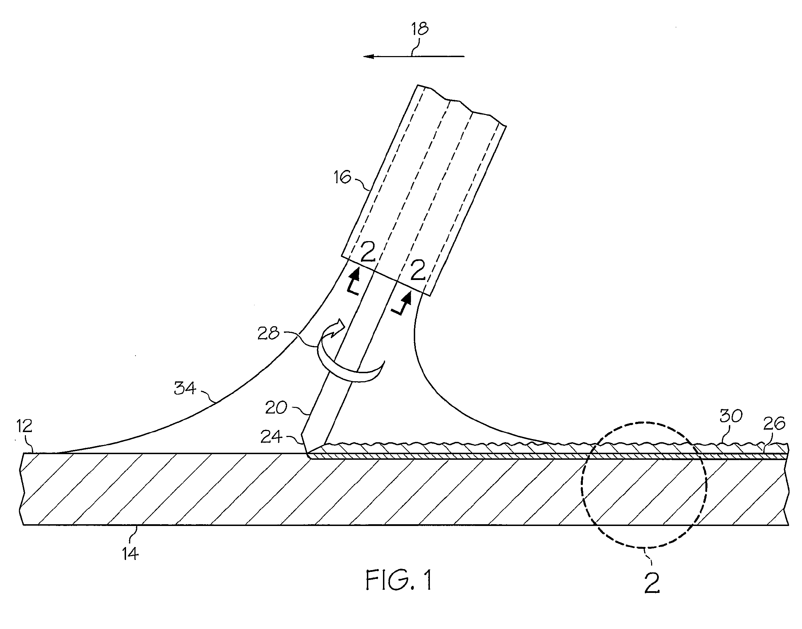

Turning to FIG. 1, ESD can be used to deposit a superalloy onto a surface 12 of a turbine component 14, which is one example of a substrate. An applicator 16 can be moved in the direction of arrow 18 relative to the turbine component 14. The applicator 16 can hold an ESD electrode 20 in close proximity to the surface 12 of the turbine component 14. Pulses of electrical energy create high temperatures at the tip 24 of the ESD electrode 20 and ionize the constituent components of the ESD electrode 20. The ionized components are drawn to the negatively charged turbine component 14 where the ionized components produce an alloy with the turbine component 14 in a diffusion layer 26 and deposit a layer, or coating 30, on the diffusion layer 26. The ESD electrode 20 can be rotated in the direction of arrow 28 during the ESD process to foster even erosion of the consumable ESD electrode 20. An atmosphere 34 of inert gas can be provided around the ESD process location to help prevent oxidation of the ionized components. In one example, the inert gas is argon, although any suitable inert gas can be used.

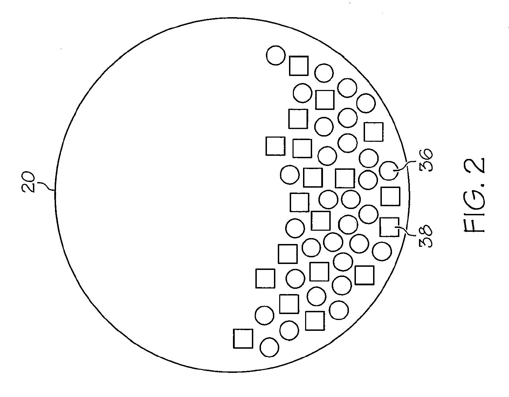

FIG. 2 shows a cross-sectional view of an example ESD electrode 20. The ESD electrode can include a powder of a first metal 36 and a powder of a second metal 38. The two powders are sintered together so that the powder of the first metal 36 and the powder of the second metal 38 do not combine to form one alloy, but instead are comingled within the ESD electrode 20. It is to be appreciated that FIG. 2 is only a schematic representation of the cross-sectional view to demonstrate that the first metal 36 and the second metal 38 are comingled and not combined. The representation of FIG. 2 is not meant to be representative of grain shape, size, structure, etc.

The first metal 36 can be a superalloy that is to be deposited onto a substrate such as a die or a turbine component 14 (best seen in FIG. 1). The second metal 38 is a nickel-containing braze alloy that has a lower melting point than the superalloy. Several suitable examples of braze alloys are contemplated, such as BNi-2, BNi-5, BNi-9, the metallic alloy sold under the trademark AMDRY 915 (AMDRY is a registered trademark of Sulzer Metco Management AG), AMDRY DF-4B, AMDRY D-15, Mar-M-509B, AMDRY BRB, and others. Additionally, the superalloy and the braze alloy could be presintered preforms such as combinations of Mar-M-247/AMDRY DF-4B, Rene R142/AMDRY BRB, Rene 80/AMDRY D-15. Any suitable ratio of superalloy to braze alloy can be selected for use in the ESD electrode 20. In one example, the ESD electrode 20 includes 90% superalloy and 10% braze alloy, while in another example, the ESD electrode 20 includes 10% superalloy and 90 % braze alloy. Any number of suitable combinations of superalloys and braze alloys in a complete range of mixtures may be used. For example, any one or a combination of the following superalloys: Rene 108, Rene 142, Rene 195, Rene N5, GTD-111, GTD-444, and Mar-M-247 can be used with any one or a combination of the following braze alloys: AMDRY DF-4B, Mar-M-509B, AMDRY BRB, AMDRY D-15, and AMDRY D-15 M2, or similar braze alloys.

Additionally, various particle sizes of the superalloy and braze alloy are contemplated for use in the ESD electrode 20. In one example, the particle sizes of the superalloy and the braze alloy are within the range between about 44 microns and about 125 microns. The described ESD electrode 20 including a suitable combination of superalloy and braze alloy with suitable particle sizes can be termed a PSP rod, or presintered pre-formed rod.

It has been found that the presence of the lower melting point nickel-containing braze alloy within the ESD electrode 20 benefits the ESD process. The nickel-containing braze alloy promotes spark production between the ESD electrode and the substrate. This increased spark production can permit greater speed in the ESD process to cover more substrate area in a given amount of time. The nickel-containing braze alloy can also increase the deposition rate or mass transfer of the superalloy, which can result in a thicker coating 30 on the substrate. Multiple layers can be applied in cases where a thicker coating 30 is required. Additionally, the presence of the lower melting point nickel-containing braze alloy can increase metallurgical bonding between the superalloy and the substrate due to wetting and spreading effects of the braze alloy.

ESD weld repair and coatings 30 can be present in high temperature applications such as dies for casting or extrusion and turbine components 14. These high temperature environments can negatively affect lower melting point braze alloys. The described ESD electrode 20 permits the deposition of more heat resistant superalloy onto the substrate while depositing lesser amounts of the braze alloy onto the substrate. In one example, the superalloy is deposited onto the substrate while no braze alloy is deposited onto the substrate so that the finished product does not contain all of the constituent parts of the ESD electrode. In another example, braze alloy is deposited onto the substrate with the superalloy in a lower ratio than is present within the ESD electrode.

The braze alloy is a vehicle for aiding the deposition of the superalloy powder onto the substrate. It is contemplated that a percentage of the braze alloy can be deposited onto the substrate from 0% to a percentage that is less than the percentage of the braze alloy contained within the ESD electrode. The percentage of braze alloy deposited onto the substrate can be limited so that the amount of braze alloy deposited on the substrate does not affect downstream performance of the substrate containing component. Any number of principles can be at work to limit the amount of braze alloy deposited onto the substrate including, but not limited to, the ionized braze alloy not bonding to the substrate and the braze alloy forming a powder on the surface of the substrate and/or the coating 30 which is easily removed.

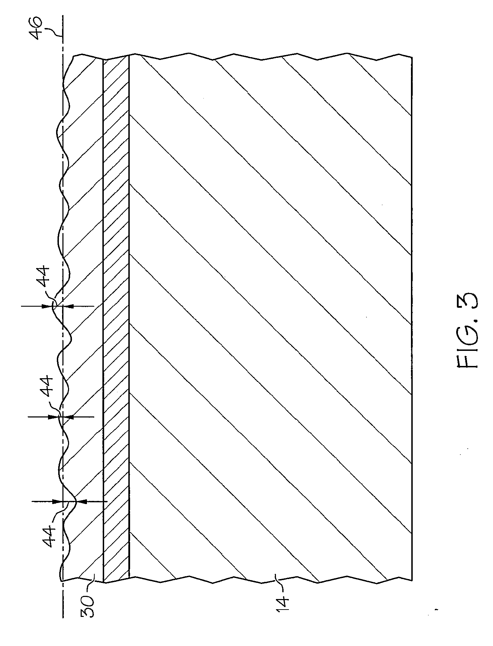

Turning to FIG. 3, one variable of a coating 30 or repair weld deposited by the ESD electrode 20 (best seen in FIG. 1) is the surface roughness. Increased surface roughness of the turbine component 14 can lead to increased friction loss through the turbine resulting in pressure loss, efficiency losses, and disruption of the heat transfer capabilities of the turbine component 14. As a result, it is often desirable to minimize the roughness of any repair material and/or coating 30 on the surface of the turbine component 14. Rₐ is one common roughness parameter used to evaluate the roughness of a surface representing the arithmetic average of the absolute values of distances 44 measured from a mean line 46 to the individual peaks and valleys of the coating 30.

The presence of the lower melting point nickel-containing braze alloy within the ESD electrode 20 has been shown to reduce the Rₐ value of the coating 30 which can be beneficial when depositing material on dies or turbine components 14. Furthermore, the ratio of the superalloy powder to the braze alloy powder within the ESD electrode 20 affects the Rₐ value of the coating 30. In one specific example, a ratio of 60 parts superalloy powder to 40 parts braze alloy powder within the ESD electrode 20 produces a coating 30 with an Rₐ value of 2.01 µm. The ratio of the superalloy powder to the braze alloy powder can be adjusted to produce a coating 30 with an Rₐ value that is suitable for the substrate containing component to eliminate the need for re-work required to reduce the Rₐ value of the coating 30 to a suitable value. Different suitable ratios of superalloy powder to braze alloy powder can be selected for different turbine components 14 such as buckets, nozzles, and shrouds when using the described repair or coating technique for turbine components 14. The different ratios can be dependent upon the designed operating requirements. It is to be appreciated that selection of suitable superalloys and braze alloys can also affect the Rₐ roughness value of the coating 30.

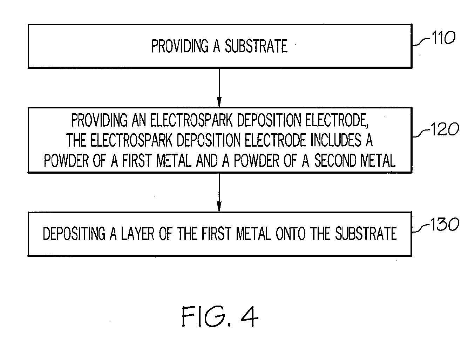

An example method of deposition of a coating 30 on a substrate is generally described in FIG. 4. The method can be performed in connection with the example ESD electrode 20 shown in FIGS. 1 and 3. The method includes the step 110 of providing a substrate. The substrate can be a metal or a superalloy designed for specific performance characteristics such as superior high mechanical strength and creep resistance at high temperatures, good surface stability, and corrosion and oxidation resistance.

The method further includes the step 120 of providing an ESD electrode 20. The ESD electrode 20 includes a powder of a first metal 36, which can be a superalloy. The ESD electrode 20 also includes a powder of a second metal 38 which is a braze alloy including nickel. The braze alloy has a lower melting point than the first metal. The powder of the first metal 36 and the powder of the braze alloy are sintered together to form the ESD electrode 20 so that the powder of the first metal 36 and the powder of the braze alloy are comingled but not combined within the ESD electrode.

The method also includes the step 130 of depositing a layer, or coating 30, of the first metal onto the substrate using an ESD process. Pulses of electrical energy create high temperatures at the tip of the ESD electrode 20 and ionize the constituent components of the ESD electrode 20. The ionized components are drawn to the negatively charged substrate where the ionized components produce an alloy with the turbine component in a diffusion layer and create a coating 30 on the diffusion layer.

The method can further include the step of depositing an amount of the braze alloy onto the substrate. A lower ratio of the braze alloy to the first metal 36 is deposited onto the substrate than the ratio of the second metal 38 to the first metal 36 present within the ESD electrode 20. The deposited coating 30 can have a relatively low surface roughness. In one example, the Rₐ value of the surface roughness is less than about 2.01 µm.

Specific Example 1: A combination of 60% superalloy powder and 40% nickel-based braze alloy powder were sintered together to form an ESD electrode of 0.64 cm (1/4-in) diameter and 2.54 cm (1-in) length. The ESD electrode was used to deposit a 0.013 cm (0.005-in) coating of the superalloy onto a substrate with an Rₐ value of 2.01 µm. Additional layers of the coating were applied as needed.

In the above-described examples, the method and apparatus provide means for depositing a layer, or coating, of a metal such as a superalloy onto a substrate. Application of the superalloy for welding, micro-repair, or coating operations is conducted with an electrospark deposition technique. The resultant substrate coating contains a ratio of braze alloy to superalloy that is lower than the ratio of braze alloy to superalloy contained within the ESD electrode. The ratio of the two alloys can be modified to produce coatings with relatively low Rₐ roughness values. The low Rₐ values can be considered to be an acceptable for downstream applications of the substrate containing component such that the component does not require further re-work operations such as laser treatments, grinding, ultrasonic treatments, or the like to achieve the desired Rₐ values. Additionally, the method and apparatus provide an alternative to coating operations that required multiple steps to achieve a desired Rₐ value. The ESD operations are relatively low-cost and of relatively simple operation. It is to be appreciated that the described method and apparatus can be used with shielding devices so that deposition can take place only on particular sections of substrate.

The invention has been described with reference to the example embodiments described above. Modifications and alterations will occur to others upon a reading and understanding of this specification. Example embodiments incorporating one or more aspects of the invention are intended to include all such modifications and alterations insofar as they come within the scope of the appended claims.

## Claims

1. An electrospark deposition electrode including:
a powder of a first metal; and
a powder of a second metal, wherein the second metal is a braze alloy including nickel, the powder of the second metal having a lower melting point than the first metal,
wherein the powder of the first metal and the powder of the second metal are sintered together to form the electrospark deposition electrode so that the powder of the first metal and the powder of the second metal are comingled but not combined within the electrospark deposition electrode.

2. The electrospark deposition electrode according to claim 1, wherein the first metal is a superalloy.

3. The electrospark deposition electrode according to claim 2, wherein the superalloy includes a base alloying element of nickel.

4. The electrospark deposition electrode according to claim 2, wherein the superalloy includes a base alloying element of cobalt.

5. The electrospark deposition electrode according to any one of claims 2 to 4, wherein the electrospark deposition electrode contains 60% superalloy and 40% of the second metal.

6. The electrospark deposition electrode according to any one of claims 1 to 4,
wherein the electrospark deposition electrode contains a maximum of 90% of the second metal.

7. The electrospark deposition electrode according to any one of claims 2 to 6, wherein the particle sizes of the superalloy and the second metal are in the range between about 44 microns and about 125 microns.

8. A method for the deposition of a coating on a substrate including:
providing a substrate;
providing an electrospark deposition electrode, wherein the electrospark deposition electrode includes a powder of a first metal, a powder of a second metal, wherein the second metal is a braze alloy including nickel, the powder of the second metal having a lower melting point than the first metal, wherein the powder of the first metal and the powder of the second metal are sintered together to form the electrospark deposition electrode so that the powder of the first metal and the powder of the second metal are comingled but not combined within the electrospark deposition electrode; and
depositing a layer of the first metal onto the substrate using an electrospark deposition process.

9. The method according to claim 8, further including the step of depositing an amount of the second metal onto the substrate.

10. The method according to claim 9, wherein the step of depositing an amount of the second metal onto the substrate further includes depositing a lower ratio of the second metal to the first metal onto the substrate than the ratio of the second metal to the first metal present within the electrospark deposition electrode.

11. The method according to any one of claims 8 to 10, wherein the step of depositing a layer of the first metal onto the substrate using an electrospark deposition process includes creating a deposited layer with a surface roughness of less than 2.01 µm.

12. The method according to claim 8, wherein the step of depositing a layer of the first metal onto the substrate using an electrospark deposition process includes conducting the electrospark deposition process in an atmosphere of an inert gas.

13. The method according to claim 12, wherein the inert gas is argon.

## Patentansprüche

1. Elektrofunkenabscheidungselektrode, enthaltend:
ein Pulver aus einem ersten Metall; und
ein Pulver aus einem zweiten Metall, wobei das zweite Metall eine Hartlotlegierung ist, die Nickel enthält, wobei das Pulver aus dem zweiten Metall einen niedrigeren Schmelzpunkt als das erste Metall hat,
wobei das Pulver aus dem ersten Metall und das Pulver aus dem zweiten Metall zusammen gesintert werden, um die Elektrofunkenabscheidungselektrode zu bilden, so dass das Pulver aus dem ersten Metall und das Pulver aus dem zweiten Metall in der Elektrofunkenabscheidungselektrode vermengt, aber nicht vereint sind.

2. Elektrofunkenabscheidungselektrode nach Anspruch 1, wobei das erste Metall eine Superlegierung ist.

3. Elektrofunkenabscheidungselektrode nach Anspruch 2, wobei die Superlegierung ein Basislegierungselement aus Nickel enthält.

4. Elektrofunkenabscheidungselektrode nach Anspruch 2, wobei die Superlegierung ein Basislegierungselement aus Kobalt enthält.

5. Elektrofunkenabscheidungselektrode nach einem der Ansprüche 2 bis 4, wobei die Elektrofunkenabscheidungselektrode 60% Superlegierung und 40% des zweiten Metalls enthält.

6. Elektrofunkenabscheidungselektrode nach einem der Ansprüche 1 bis 4, wobei die Elektrofunkenabscheidungselektrode maximal 90% des zweiten Metalls enthält.

7. Elektrofunkenabscheidungselektrode nach einem der Ansprüche 2 bis 6, wobei die Partikelgröße der Superlegierung und des zweiten Metalls im Bereich von 44 Mikrometern bis etwa 125 Mikrometer liegen.

8. Verfahren zum Abscheiden einer Beschichtung auf einer Trägerschicht, enthaltend:
Bereitstellen einer Trägerschicht;
Bereitstellen einer Elektrofunkenabscheidungselektrode, wobei die Elektrofunkenabscheidungselektrode ein Pulver aus einem ersten Metall, ein Pulver aus einem zweiten Metall enthält, wobei das Metall eine Hartlotlegierung ist, die Nickel enthält, wobei das Pulver aus dem zweiten Metall einen niedrigeren Schmelzpunkt als das erste Metall hat, wobei das Pulver aus dem ersten Metall und das Pulver aus dem zweiten Metall zusammen gesintert werden, um die Elektrofunkenabscheidungselektrode zu bilden, so dass das Pulver aus dem ersten Metall und das Pulver aus dem zweiten Metall in der Elektrofunkenabscheidungselektrode vermengt, aber nicht vereint sind; und
Abscheiden einer Schicht des ersten Metalls auf die Trägerschicht unter Verwendung eines Elektrofunkenabscheidungsprozesses.

9. Verfahren nach Anspruch 8, des Weiteren enthaltend den Schritt zum Abscheiden einer Menge des zweiten Metalls auf die Trägerschicht.

10. Verfahren nach Anspruch 9, wobei der Schritt zum Abscheiden einer Menge des zweiten Metalls auf die Trägerschicht ferner ein Abscheiden eines geringeren Verhältnisses des zweiten Metalls zum ersten Metall auf die Trägerschicht als das Verhältnis des zweiten Metalls zum ersten Metall, das in der Elektrofunkenabscheidungselektrode vorhanden ist, enthält.

11. Verfahren nach einem der Ansprüche 8 bis 10, wobei der Schritt zum Abscheiden einer Schicht des ersten Metalls auf die Trägerschicht unter Verwendung eines Elektrofunkenabscheidungsprozesses ein Bilden einer abgeschiedenen Schicht mit einer Oberflächenrauheit von weniger als 2,01 µm enthält.

12. Verfahren nach Anspruch 8, wobei der Schritt zum Abscheiden einer Schicht des ersten Metalls auf die Trägerschicht unter Verwendung eines Elektrofunkenabscheidungsprozesses ein Ausführen des Elektrofunkenabscheidungsprozesses in einer Inertgasatmosphäre enthält.

13. Verfahren nach Anspruch 12, wobei das Inertgas Argon ist.

## Revendications

1. Electrode de dépôt par électroérosion comprenant une poudre d'un premier métal ; et
une poudre d'un second métal, dans laquelle le second métal est un alliage de brasage comprenant du nickel, la poudre du second métal ayant un point de fusion inférieur à celui du premier métal,
dans laquelle la poudre du premier métal et la poudre du second métal sont frittées conjointement pour former l'électrode de dépôt par électroérosion de sorte que la poudre du premier métal et la poudre du second métal soient conjointement mêlées, mais pas combinées dans l'électrode de dépôt par électroérosion.

2. Electrode de dépôt par électroérosion selon la revendication 1, dans laquelle le premier métal est un superalliage.

3. Electrode de dépôt par électroérosion selon la revendication 2, dans laquelle le superalliage comprend un élément d'alliage de base de nickel.

4. Electrode de dépôt par électroérosion selon la revendication 2, dans laquelle le superalliage comprend un élément d'alliage de base de cobalt.

5. Electrode de dépôt par électroérosion selon l'une quelconque des revendications 2 à 4, dans laquelle l'électrode de dépôt par électroérosion contient 60 % de superalliage et 40 % du second métal.

6. Electrode de dépôt par électroérosion selon l'une quelconque des revendications 1 à 4, dans laquelle l'électrode de dépôt par électroérosion contient un maximum de 90 % du second métal.

7. Electrode de dépôt par électroérosion selon l'une quelconque des revendications 2 à 6, dans laquelle les tailles particulaires du superalliage et du second métal se situent dans la plage comprise entre 44 micromètres et environ 125 micromètres.

8. Procédé de dépôt d'un revêtement sur un substrat comprenant les étapes consistant à :
fournir un substrat ;
fournir une électrode de dépôt par électroérosion, dans lequel l'électrode de dépôt par électroérosion comprend une poudre d'un premier métal, un poudre d'un second métal, dans lequel le second métal est un alliage de brasage comprenant du nickel, la poudre du second métal ayant un point de fusion inférieur à celui du premier métal, dans lequel la poudre du premier métal et la poudre du second métal sont frittées conjointement pour former l'électrode de dépôt par électroérosion en sorte que la poudre du premier métal et la poudre du second métal soient conjointement mêlées, mais pas combinées dans l'électrode de dépôt par électroérosion ; et
déposer une couche du premier métal sur le substrat en utilisant un procédé de dépôt par électroérosion.

9. Procédé selon la revendication 8, comprenant en outre l'étape de dépôt d'une certaine quantité du second métal sur le substrat.

10. Procédé selon la revendication 9, dans lequel l'étape de dépôt d'une certaine quantité du second métal sur le substrat comprend en outre le dépôt d'un rapport inférieur du second métal au premier métal sur le substrat que le rapport du second métal au premier métal présent dans l'électrode de dépôt par électroérosion.

11. Procédé selon l'une quelconque des revendications 8 à 10, dans lequel l'étape de dépôt d'une couche du premier métal sur le substrat en utilisant le procédé de dépôt par électroérosion comprend la création d'une couche déposée d'une rugosité de surface inférieure à 2,01 µm.

12. Procédé selon la revendication 8, dans lequel l'étape de dépôt d'une couche du premier métal sur le substrat en utilisant un procédé de dépôt par électroérosion comprend la réalisation du procédé de dépôt par électroérosion dans une atmosphère de gaz inerte.

13. Procédé selon la revendication 12, dans lequel le gaz inerte est l'argon.
